Europäisches Patentamt

European Patent Office

Office européen des brevets

(11) Numéro de publication : **0 070 947**
**B1**

(12) **FASCICULE DE BREVET EUROPÉEN**

(45) Date de publication du fascicule du brevet :
07.11.84

(21) Numéro de dépôt : 81420118.2

(22) Date de dépôt : 30.07.81

(51) Int. Cl.³ : **F 16 J 15/32, F 16 J 15/56**

(54) **Garniture d'étanchéité hydraulique à double effet.**

(43) Date de publication de la demande :
09.02.83 Bulletin 83/06

(45) Mention de la délivrance du brevet :
07.11.84 Bulletin 84/45

(84) Etats contractants désignés :
**AT BE CH DE GB IT LI LU NL SE**

(56) Documents cités :
**FR-A- 2 231 267**

(73) Titulaire : **Dechavanne, Jacques**
**9 Chemin du Guâ**
**F-38360 Sassenage (FR)**

(72) Inventeur : **Dechavanne, Jacques**
**9 Chemin du Guâ**
**F-38360 Sassenage (FR)**

(74) Mandataire : **Maureau, Pierre**
**Cabinet GERMAIN & MAUREAU Le Britannia - Tour C**
**20, Boulevard E. Déruelle**
**F-69003 Lyon (FR)**

Jouve, 18, rue St-Denis, 75001 Paris, France

0 070 947

## Description

La présente invention concerne une garniture d'étanchéité hydraulique à double effet, assurant notamment l'étanchéité hydraulique à double effet, assurant notamment l'étanchéité dynamique entre la paroi intérieure d'un cylindre et un piston coulissant dans ledit cylindre et séparant deux enceintes à pression différente ou non, le piston pouvant être libre ou attelé à une tige de transmission de puissance.

L'invention permet d'assurer, avec une grande fiabilité, ce genre d'étanchéité, même lorsque le piston est animé d'un mouvement rotatif de vitesse moyenne, combiné ou non à son mouvement alternatif rectiligne.

Les dispositifs existants, assurant les mêmes fonctions d'étanchéité à double effet, sont réalisés de différentes manières, à savoir :

— soit par l'adoption de joints toriques ou de joints à profil en « U », montés dans deux gorges séparées, le guidage étant réalisé soit par ajustement précis du piston lui-même dans le cylindre, soit par la mise en place, entre ces deux éléments, de bagues de guidage encastrées dans des gorges usinées sur le piston ;

— soit par des assemblages monoblocs ou à éléments multiples, se montant dans une gorge unique. Ces éléments se trouvent doublés, pour assurer la fonction de guidage, par des bagues de glissement logées dans des gorges séparées.

En tout état de cause, ou bien la gorge du piston se trouve exécutée avec des étages multiples, ou bien le piston comporte plusieurs gorges, affectées respectivement au logement des joints d'étanchéité et des éléments de guidage. Dans tous les cas, les conceptions actuelles compliquent la réalisation des pistons de vérins hydrauliques et notamment de leurs gorges, et un but de l'invention est de fournir un assemblage permettant l'utilisation de pistons monoblocs ou en deux parties comportant une gorge simple, plus ou moins longue, de réalisation facile.

Simultanément, l'invention a pour but de procurer, notamment pour les vérins hydrauliques, un assemblage capable d'assurer des fonctions multiples, à savoir : étanchéité, guidage et raclage, ces trois fonctions étant remplies, dans le cas le plus simple, par une seule et même pièce principale, l'assemblage étant composé dans ce cas de deux éléments seulement.

Le brevet FR-A-2 231 267 décrit une garniture d'étanchéité hydraulique à double effet formée d'un anneau souple de poussée et d'étanchéité et de deux bagues entourant cet anneau, l'ensemble étant monté dans une gorge du piston limitée par deux épaulements. Cette garniture nécessite cependant des bagues de guidage ou anti-extrusion supplémentaires.

L'invention a essentiellement pour objet une garniture d'étanchéité hydraulique à double effet selon la revendication 1.

La garniture ainsi réalisée assure, par le même élément principal qui est la bague, les trois fonctions d'étanchéité (par la partie centrale), de guidage et de raclage (par les extrémités) et elle constitue un ensemble pouvant être monté par extension radiale dans une gorge unique longue d'un piston à structure simple.

Dans la partie centrale conçue pour assurer l'étanchéité, chacune des deux ailes d'étanchéité est avantageusement reliée à la partie principale adjacente de la bague par l'intermédiaire d'une zone charnière mince ; les lèvres d'étanchéité ont une section plus épaisse au droit de leurs arêtes de contact respectives. En d'autres termes, chaque lèvre d'étanchéité s'épaissit au fur et à mesure que l'on s'éloigne de sa base d'attache à la partie principale adjacente de la bague. La zone charnière mince est nécessaire, compte tenu de ce que les éléments d'étanchéité et de guidage sont réalisés dans le même matériau dur et qu'il faut donner à la lèvre une certaine souplesse. Le contact d'étanchéité, étant réalisé en matériau dur, ne subit pas les effets dits de gommage généralement constatés lorsque les étanchéités sont réalisées avec des matériaux souples de faible dureté. De plus, une autre distinction vis-à-vis des réalisations actuelles est le fait que la base d'attache de chaque lèvre d'étanchéité, au lieu d'être relativement réduite, se trouve très longue et a pour rôle le guidage de l'ensemble et non la résistance à l'extrusion de la lèvre d'étanchéité.

Suivant une forme de réalisation particulièrement simple, puisqu'elle conduit à une garniture constituée seulement de deux éléments distincts assurant toutes les fonctions, la bague est une pièce monobloc, auquel cas les deux lèvres d'étanchéité sont reliées entre elles par une zone charnière très fine, délimitant une petite gorge extérieure, laquelle retient un petit anneau d'huile favorisant le glissement, en améliorant encore le coefficient de frottement déjà excellent de ce genre de garniture.

De préférence, les zones charnières, reliant les lèvres d'étanchéité aux parties principales de la bague et/ou les reliant entre elles, sont aptes à restituer, par suite de la déformation des lèvres d'étanchéité, des efforts compensant la « perte de mémoire » du matériau constitutif de l'anneau de poussée. Cette caractéristique complémentaire constitue une nouveauté avantageuse par rapport aux joints dits composites qui se trouvent dans le commerce, généralement constitués par un anneau de contact maintenu appliqué sur la surface à étancher par un anneau de pression intérieur. Ces joints ne possèdent qu'une seule source d'efforts, et l'on sait que tous les matériaux, utilisés pour la réalisation des anneaux de poussée, que ceux-ci soient de section ronde, carrée ou rectangulaire, ont une déformation rémanente souvent caractérisée par des « pertes de mémoire » assez importantes. Lorsque les anneaux de contact s'usent et que, simultanément, la « mémoire » du matériau souple généra-

2

teur de poussée diminue, la qualité d'étanchéité baisse très rapidement. Au contraire, l'invention permet d'obtenir des efforts de placage de trois natures différentes qui s'additionnent, et qui ont leurs sources en quatre points différents : l'anneau de poussée, les deux zones charnières reliant les lèvres d'étanchéité aux parties principales adjacentes de la bague, et la zone charnière reliant entre elles les deux lèvres d'étanchéité. L'on obtient ainsi une qualité d'étanchéité améliorée et surtout rendue constante dans le temps, d'autant plus que le contact d'étanchéité s'effectue suivant des lignes et non des surfaces, tout au moins lorsque la garniture est neuve. Lorsque la garniture s'use, les lignes de contact vont progressivement s'épaissir mais resteront toujours très faibles.

Suivant une autre forme de réalisation de la garniture d'étanchéité objet de l'invention, la bague est scindée en deux parties, symétriques ou non, dont chacune comprend : un corps principal à fonction de guidage, une lèvre d'étanchéité reliée au corps principal, notamment par une zone charnière, mais non reliée à la lèvre d'étanchéité de l'autre partie, et à l'opposé de la lèvre d'étanchéité, une aile prolongée par une lèvre de raclage. On comprend que cette autre forme de réalisation résulte simplement de la suppression de la charnière centrale reliant précédemment entre elles les deux lèvres d'étanchéité ; les profils et les fonctions des diverses parties de la bague, notamment pour les lèvres d'étanchéité et de raclage, ne sont pas modifiés, et l'ensemble est toujours monté dans une gorge unique d'un piston. L'anneau de poussée se loge à l'intérieur de deux « demi-gorges » ménagées dans les régions extrêmes, situées en vis-à-vis, des deux parties de la bague. Cet anneau de poussée peut comporter, en son milieu, un bourrelet annulaire extérieur d'essuyage, engagé dans l'interstice qui subsiste entre les deux lèvres d'étanchéité non reliées entre elles, auquel cas la petite gorge de retenue d'huile, précédemment mentionnée, n'existe plus.

De toute façon, l'invention sera mieux comprise, et d'autres caractéristiques seront mises en évidence, à l'aide de la description qui suit, en référence au dessin schématique annexé représentant, à titre d'exemples non limitatifs, quelques formes d'exécution de cette garniture d'étanchéité hydraulique à double effet :

Figure 1 est une vue générale en demi-coupe d'une garniture conforme à l'invention, montée sur un piston de vérin hydraulique ;

Figure 2 représente, à plus grande échelle, le détail de la partie centrale de la garniture de figure 1 qui assure l'étanchéité ;

Figure 3 est une vue de détail similaire à figure 2, mais illustrant le fonctionnement de la partie centrale d'étanchéité au contact de la paroi du cylindre du vérin ;

Figure 4 représente le détail d'une extrémité de la garniture de figure 1 qui assure le raclage ;

Figure 5 est une vue de détail similaire à figure 2, mais correspondant à une garniture conforme à l'invention dont la bague est scindée en deux parties ;

Figure 6 illustre une variante de la garniture de figure 5 avec bague en deux parties.

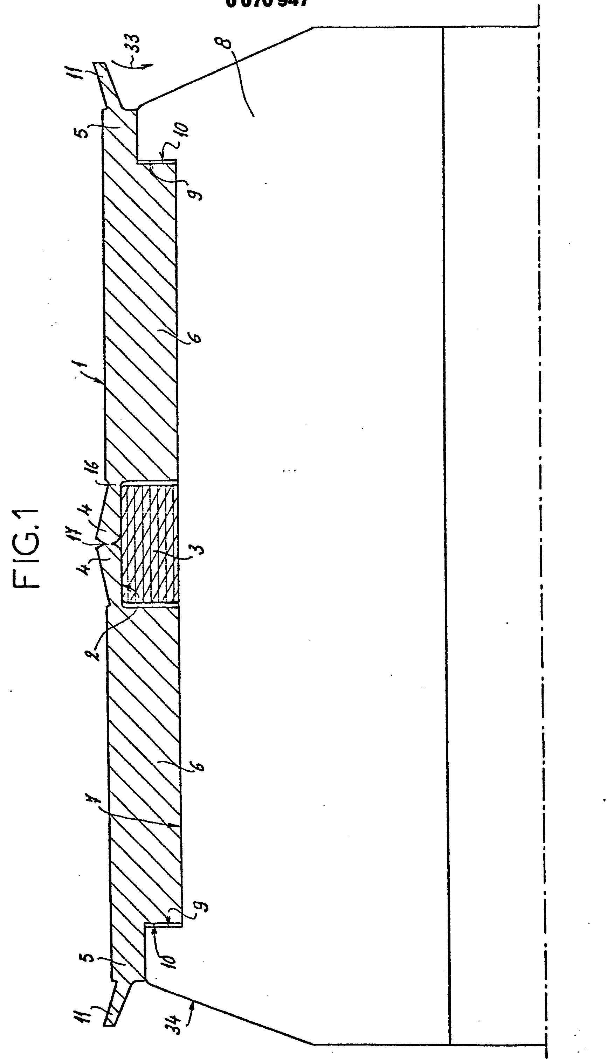

La garniture d'étanchéité objet de l'invention, visible sur la figure 1, comprend une bague monobloc 1 réalisée en matériau rigide, au centre de laquelle se trouve ménagée, intérieurement, une gorge annulaire 2 constituant le logement d'un anneau souple de poussée 3. Cet anneau 3 a pour rôle de maintenir une pression constante sur deux lèvres d'étanchéité symétriques 4, constituées dans la partie centrale de la bague 1 au droit de la gorge 2 et appartenant à ladite bague 1.

Aux deux extrémités de la bague 1 sont formées des ailes 5, d'épaisseur plus faible que celle des deux parties principales 6 de la bague 1 à fonction de guidage. L'ensemble constitué par la bague 1 et par l'anneau de poussée 3 peut ainsi être monté dans une gorge longue 7 d'un piston 8, et retenu axialement par les deux épaulements annulaires 9 qui délimitent cette gorge 7, lesdits épaulements 9 correspondant aux décrochements internes 10 séparant les parties épaisses 6 et les ailes 5.

Chaque aile 5 d'épaisseur réduite se trouve elle-même prolongée par une lèvre de raclage 11.

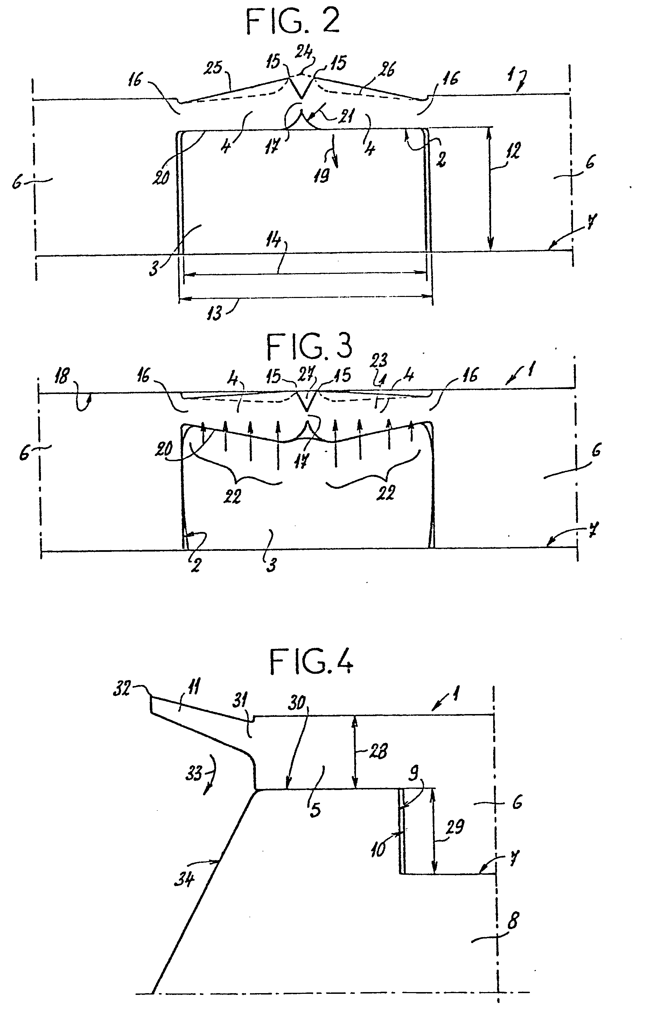

La partie centrale d'étanchéité sera maintenant décrit de façon plus détaillée, en référence, à la figure 2 :

Cette figure 2 montre donc la région centrale de la bague 1, pièce principale de la garniture, avec sa gorge annulaire 2 dont la profondeur est indiquée en 12 et de la longueur en 13, qui reçoit l'anneau de poussée 3 dont la section a une hauteur égale à la profondeur 12 de la gorge 2, et dont la longueur 14 est légèrement inférieure à celle 13 de la gorge 2.

Il est à noter cependant que la gorge 2 peut être évidemment réalisée en un autre emplacement intermédiaire que le milieu de la bague 1, par exemple pour adapter de façon satisfaisante la garniture à un piston 8 réalisé en deux parties symétriques ; dans ce cas, la gorge 2 sera prévue en position décentrée, afin d'éviter que la ligne de jonction des deux parties symétriques du piston ne se trouve sous l'anneau de poussée 3.

Les deux lèvres d'étanchéité 4, situées au droit de la gorge 2 dans tous les cas, sont réalisées suivant le profil non limitatif représenté à titre d'exemple sur la figure 2. Ces lèvres 4 ont une épaisseur importante au droit de leurs arêtes de contact d'étanchéité 15, mais sont reliées par l'intermédiaire d'une zone charnière 16 relativement mince aux parties principales adjacentes 6 de la bague 1. De plus, les deux lèvres 4 sont reliées entre elles par une autre zone charnière très fine 17.

Lorsque l'on introduit l'ensemble décrit précédemment dans le cylindre, dont la paroi intérieure 18 (voir figure 3) a un diamètre égal au diamètre extérieur des deux parties principales 6 de la bague 1, les arêtes 15 vont devoir s'aligner avec les génératrices de cette paroi 18 et, de ce fait, les lèvres d'étanchéité 4 vont subir une déformation suivant la flèche 19 à partir de la position à l'état libre suivant la figure 2, jusqu'à obtenir la position de fonctionnement de la figure 3.

Au cours de cette déformation, le profil intérieur 20 des lèvres d'étanchéité 4 va légèrement glisser sur la surface extérieure de l'anneau de poussée 3. Pour éviter que cet anneau 3 soit alors endommagé, le profil intérieur 20 de chaque lèvre 4 est incurvé suivant un certain rayon 21, près de la zone charnière 17 reliant les deux lèvres 4 entre elles. Comme le montre la figure 3, l'anneau 3 va être écrasé sans dommage par les parties incurvées du profil 20, qui déforment sa surface extérieure et engendrent dans ledit anneau 3 des efforts de réaction 22, de valeurs dégressives au fur et à mesure que l'on s'éloigne des arêtes de contact d'étanchéité 15.

Dans la position représentée sur la figure 3, les zones charnières minces 16 enregistrent et mémorisent des tensions, qui engendrent des efforts tendant à ramener vers l'extérieur, suivant la flèche 23, les lèvres d'étanchéité 4, ces efforts s'ajoutant à ceux 22 exercés par l'anneau de poussée 3 pour assurer le contact d'étanchéité des arêtes 15. La zone charnière très fine 17, reliant entre elles les deux lèvres d'étanchéité 4, mémorise aussi des tensions qui complètent encore les réactions provoquées par les zones charnières 16 et par l'anneau de poussée 3.

Dans certaines applications, la double arête de contact 15 peut être remplacée par une seule arête centrale 24 commune aux deux lèvres 4 (en pointillés sur la figure 2). Le profil extérieur rectiligne 25 des lèvres d'étanchéité 4 peut aussi être remplacé par un profil concave, tel que par exemple celui 26 (en pointillés sur la figure 2), afin de conserver dans le temps un contact parfaitement linéaire par l'arête 15.

La petite gorge centrale extérieure 27 située entre les deux arêtes 15, dans le cas d'une garniture à double ligne de contact, permet de conserver, au centre de la partie d'étanchéité, un petit anneau d'huile favorisant le glissement.

Comme déjà indiqué plus haut, les deux extrémités de la bague 1 sont conformées de manière à assurer la fonction de raclage. La figure 4 montre le détail de l'une de ces extrémités, le profil ici représenté n'étant évidemment pas limitatif.

La section annulaire réduite 28 de l'aile 5 est déterminée de manière que la section résiduelle 29 soit suffisante, pour que les efforts transmis par la face annulaire limitant la partie principale 6, au niveau du décrochement 10, ne provoquent pas, sur l'épaulement 9 du piston 8, des réactions par unité de surface entraînant des taux de compression supérieurs aux caractéristiques mécaniques du matériau constitutif de la bague 1.

L'aile 5 prend appui sur une surface cylindrique 30 du piston 8, et elle se prolonge, comme déjà indiqué plus haut, par une lèvre de raclage 11. Cette lèvre 11 est allongée et s'étend, en direction oblique, vers l'extérieur. Elle est reliée à l'aile 5 par une zone charnière 31 épaisse, mais nettement plus mince que la section annulaire 28 de l'aile 11. La lèvre 11 devient plus fine en direction de son extrémité libre, et elle se termine par une arête vive 32.

Les impuretés qui pourraient se trouver sur la paroi intérieure 18 du cylindre (voir figure 3) sont raclées par la lèvre 11 et ramenées, suivant la flèche 33, vers la face terminale tronconique 34 du piston 8, sans risque d'accumulation de ces impuretés au niveau de l'arête 32 en contact avec la paroi du cylindre.

Etant donné que l'ensemble de la bague 1 est réalisé en matériau dur, la lèvre 11 assure un raclage efficace comme on vient de le décrire, mais elle ne réalise pas une étanchéité totale. Le fluide hydraulique peut franchir l'arête 32, de même qu'il peut s'infiltrer le long de la surface cylindrique 30 du piston 8 et le long du fond de la gorge 7 du piston 8. Ce fluide peut ainsi alimenter la gorge centrale 2 de la bague 1, et soumettre l'anneau de poussée 3 à une légère déformation, susceptible de compenser la « perte de mémoire » de cet anneau 3.

L'ensemble de la garniture, dont la partie principale, c'est-à-dire la bague 1, est monobloc, est monté sur le piston 4 par une légère extension en direction radiale, l'opération de montage se trouvant facilitée par la face tronconique 34 du piston 8. Dans certains cas d'application, l'utilisation d'une presse peut être nécessaire, pour augmenter le diamètre intérieur de la bague 1 jusqu'à atteindre le diamètre de la surface cylindrique 30 du piston 8. Pendant cette opération de montage, l'anneau de poussée 3 reste en place dans la gorge 2 de la bague 1, et il subit de la même manière une extension au passage sur la surface cylindrique 30 du piston 8.

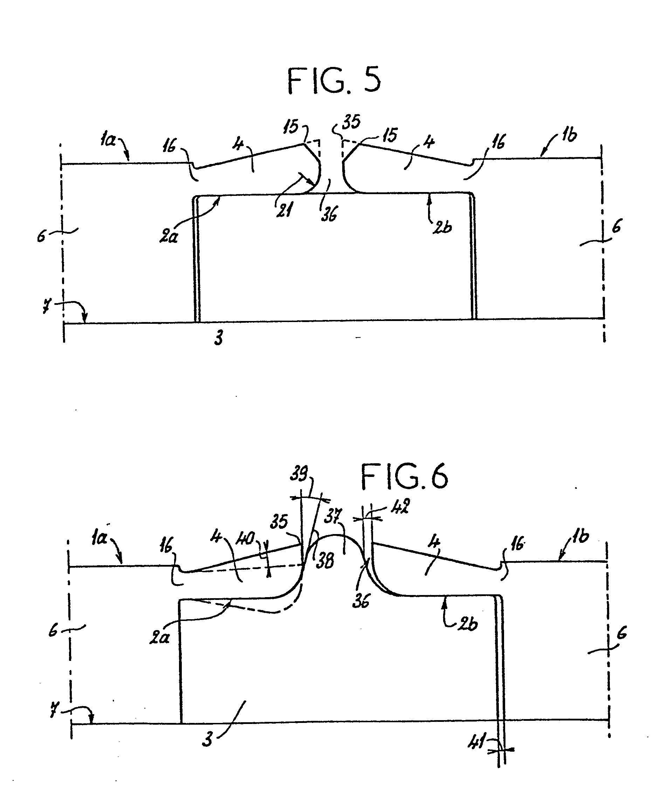

Dans le cas de la figure 5, la zone charnière reliant entre elles les deux lèvres d'étanchéité 4 est supprimée, de sorte que la bague se trouve scindée en deux parties 1a et 1b. Bien qu'elles ne soient plus reliées entre elles, les lèvres d'étanchéité 4 conservent les mêmes formes et caractéristiques que celles décrites précédemment ; elles peuvent être notamment à coupe négative donnant les arêtes 15, ou à coupe positive donnant les arêtes 35 (en pointillés).

L'interstice 36 qui subsiste ici entre les deux lèvres 4 augmente sensiblement l'anneau d'huile central se maintenant entre les deux arêtes 15.

Les lèvres d'étanchéité 4 coopèrent toujours comme décrit précédemment avec l'anneau de poussée 3, monté dans deux « demi-gorges » 2a et 2b, et les autres parties de la garniture, qui assurent les fonctions de guidage et de raclage, sont réalisées et fonctionnent d'une façon identique à la description détaillée donnée plus haut dans le cas d'une bague monobloc. En particulier, les extrémités de raclage des deux parties 1a et 1b peuvent être identiques à celle représentée sur la figure 4.

La forme de réalisation selon la figure 5 peut être retenue lorsque les quantités de garnitures à produire pour répondre au marché sont insuffisantes pour justifier la création de moules à noyau rétractable, permettant de réaliser la gorge centrale intérieure 2 des figures 1 à 3. La réalisation de la bague en deux parties 1a et 1b reste cependant plus onéreuse car elle nécessite deux opérations de fabrication distinctes.

Pour certaines applications à très faible pression, et dans lesquelles il est nécessaire d'avoir une qualité d'étanchéité et d'essuyage constante, la garniture objet de l'invention et scindée en deux parties 1a et 1b peut être exécutée suivant une variante illustrée par la figure 6.

Les deux lèvres d'étanchéité 4 sont toujours séparées l'une de l'autre par un interstice 36, mais l'anneau de poussée 3 comporte ici, en son milieu, un bourrelet annulaire extérieur d'essuyage 37 engagé dans l'interstice 36.

Les génératrices extérieures latérales 38 du bourrelet 37 sont inclinées suivant un angle 39 égal à l'angle de pivotement 40 décrit par les lèvres d'étanchéité 4, autour de leurs zones charnières 16 respectives, lors de leur mise en place. En outre, le jeu axial 41 de l'anneau 3 dans la gorge 2a, 2b est égal au jeu 42 du bourrelet 37 entre les deux lèvres 4 ; de cette façon, en même temps que les faces latérales de l'anneau 3 se plaquant sur la surface en regard appartenant à la partie 1a ou 1b de la bague, le bourrelet 37 vient se plaquer le long du nez de l'une des lèvres d'étanchéité 4.

La variante de la figure 6, est notamment applicable lorsque, dans le cas d'une réalisation de la bague en deux parties 1a et 1b, l'on veut supprimer l'anneau d'huile central, comme cela est réalisé dans la version « monobloc » en prévoyant une seule arête d'étanchéité centrale 24 (figure 2).

**Revendications**

1. Garniture d'étanchéité hydraulique à double effet, assurant notamment l'étanchéité dynamique entre la paroi intérieure (18) d'un cylindre et un piston (8) coulissant et/ou rotatif dans ledit cylindre et séparant deux enceintes à pression différente ou non, se présentant comme l'assemblage d'une bague (1) en matériau rigide et d'un anneau souple de poussée (3), l'ensemble étant monté dans une gorge (7) du piston (8) limitée par deux épaulements (9), caractérisée en ce que l'anneau souple de poussée est logé dans une gorge annulaire intérieure (2) de ladite bague (1) et en ce que la bague (1) comprend, entre deux parties principales (6) à fonction de guidage, deux lèvres d'étanchéité (4) situées au droit de l'anneau de poussée (3) et soumises à l'action de ce dernier, tandis que les deux extrémités de la bague (1) forment des ailes (5) d'épaisseur plus faible que celle des deux parties principales (6), chaque aile (5) étant elle-même prolongée par une lèvre de raclage (11).

2. Garniture d'étanchéité selon la revendication 1, caractérisée en ce que chacune des deux ailes d'étanchéité (4) est reliée à la partie principale adjacente (6) de la bague (1) par l'intermédiaire d'une zone charnière mince (16).

3. Garniture d'étanchéité selon la revendication 2, caractérisée en ce que les lèvres d'étanchéité (4) ont une section plus épaisse au droit de leurs arêtes de contact (15) respectives.

4. Garniture d'étanchéité selon la revendication 3, caractérisée en ce que sa bague (1) est une pièce monobloc et en ce que les deux lèvres d'étanchéité (4) sont reliées entre elles par une zone charnière très fine (17), délimitant une petite gorge extérieure (27).

5. Garniture d'étanchéité selon la revendication 2, caractérisée en ce que sa bague (1) est une pièce monobloc et en ce que les deux lèvres d'étanchéité (4) se raccordent suivant une seule arête d'étanchéité commune (24).

6. Garniture d'étanchéité selon l'une quelconque des revendications 2 à 5, caractérisée en ce que les zones charnières (16, 17), reliant les lèvres d'étanchéité (4) aux parties principales (6) de la bague (1) et/ou les reliant entre elles, sont aptes à restituer, par suite de la déformation des lèvres d'étanchéité (4), des efforts (23) compensant la « perte de mémoire » du matériau constitutif de l'anneau de poussée (3).

7. Garniture d'étanchéité selon l'une quelconque des revendications 2 à 6, caractérisée en ce que le profil extérieur (26) de chaque lèvre d'étanchéité (4) est concave.

8. Garniture d'étanchéité selon l'une quelconque des revendications 2 à 7, caractérisée en ce que le profil intérieur (20) de chaque lèvre d'étanchéité (4) est incurvé suivant un certain rayon (21), près de la zone charnière (17) reliant les deux lèvres (4) entre elles.

9. Garniture d'étanchéité selon l'une quelconque des revendications précédentes, excepté les revendications 4 et 5, caractérisée en ce que la bague est scindée en deux parties (1a, 1b), symétriques ou non, dont chacune comprend : un corps principal (6) à la fonction de guidage, une lèvre d'étanchéité (4) reliée au corps principal (6), notamment par une zone charnière (16), mais non reliée à la lèvre d'étanchéité (4) de l'autre partie, et à l'opposé de la lèvre d'étanchéité (4), une aile (5) prolongée par une lèvre de raclage (11).

10. Garniture d'étanchéité selon la revendication 9, caractérisée en ce que l'anneau de poussée (3) comporte, en son milieu, un bourrelet annulaire extérieur d'essuyage (37), engagé dans l'interstice (36) qui subsiste entre les deux lèvres d'étanchéité (4) non reliées entre elles.

**Claims**

1. A double-acting hydraulic sealing fitting, which ensures in particular dynamic sealing between the inner wall (18) of a cylinder and a piston (8) which slides and/or rotates in the said cylinder, and separates two enclosures which may or may not have different pressures, and is in the form of an assembly of a ring (1) made of a rigid material and of a flexible thrust ring (3), the assembly being mounted in a groove (7) of the piston (8) limited by two shoulders (9), characterized in that the flexible thrust ring is accomodated in an inner annular groove (2) of the said ring (1) and in that the ring (1) comprises, between two main portions (6) having a guiding function, two sealing lips (4) situated at right angles to the thrust ring (3) and subjected to the action of the latter whereas the two ends of the ring (1) form wings (5) of a lesser thickness than that of the two main portions (6), each wing (5) being in turn extended by a scraper lip (11).

2. A sealing fitting according to claim 1, characterized in that each of the two sealing lips (4) is connected to the main portion (6) adjacent the ring (1) by means of a thin hinge area (16).

3. A sealing fitting according to claim 2, characterized in that the sealing lips (4) have a thicker section at right angles to their respective contact edges (15).

4. A sealing fitting according to claim 3, characterized in that its ring (1) is in one piece and in that the two sealing lips (4) are connected by a very fine hinge area (17) delimiting a small exterior groove (27).

5. A sealing fitting according to claim 2, characterized in that its ring (1) is in one piece and in that the two sealing lips (4) are connected along a single common sealing ridge (24).

6. A sealing fitting according to any one of claims 2 to 5, characterised in that the hinge areas (16, 17), connecting the sealing lips (4) to the main portions (6) of the ring (1) and/or connecting one another, are capable, owing to the deformation of the sealing lips (4), of restoring forces (23) which compensate the « loss of memory » of the material constituting the thrust ring (3).

7. A sealing fitting according to any one of claims 2 to 6, characterized in that the exterior profile (26) of each sealing lip (4) is concave.

8. A sealing fitting according to any one of claims 2 to 7, characterized in that the inner profile (20) of each sealing lip (4) is curved along a certain radius (21), near the hinge area (17) connecting the two lips (4).

9. A sealing fitting according to any one of the preceding claims, except claims 4 and 5, characterized in that the ring is divided into two parts (1a, 1b), which may or may not be symmetrical and each of which comprises : a main body (6) having a guiding function, a sealing lip (4) connected to the main body (6), in particular by a hinge area (16), but not connected to the sealing lip (4) of the other part, and opposite the sealing lip (4), a wing (5) extended by a scraper lip (11).

10. A sealing fitting according to claim 9, characterized in that the thrust ring (3) comprises, in its centre, an exterior annular wiper flange (37), which engages in the gap (36) which subsists between the two unconnected sealing lips (4).

**Ansprüche**

1. Hydraulikdichtung für zweiseitige Abdichtung, insbesondere zur Gewährleistung der dynamischen Abdichtung zwischen der Innenwand (18) eines Zylinders und eines in diesem Zylinder gleitenden und/oder drehenden Kolbens (8), der zwei Räume unterschiedlichen oder nicht unterschiedlichen Druckes voneinander trennt, wobei die Dichtung sich als die Verbindung eines Ringstückes (1) aus einem starren Material und eines bildsamen Druckringes (3) darstellt und die Baugesamtheit in einer durch zwei Schultern (9) begrenzten Nut (7) des Kolbens (8) angeordnet ist, dadurch gekennzeichnet, daß der bildsame Druckring in einer inneren Ringnut (2) des genannten Ringstückes (1) angeordnet ist und daß das Ringstück (1) zwischen zwei Hauptabschnitten (6) mit Führungsfunktion zwei Dichtlippen (4) aufweist, die am Ort des Druckringes (3) liegen und unter dessen Wirkung stehen, während die beiden Enden des Ringstückes (1) Stege (5) mit einer gegenüber den beiden Hauptabschnitten (6) geringeren Dicke bilden und jeder Steg (5) seinerseits durch eine Abstreiflippe (11) verlängert ist.

2. Dichtung nach Anspruch 1, dadurch gekennzeichnet, daß jede der beiden Dichtlippen (4) mit dem benachbarten Hauptabschnitt (6) des Ringstückes (1) mittels einer Filmscharnierzone (16) verbunden ist.

3. Dichtung nach Anspruch 2, dadurch gekennzeichnet, daß die Dichtlippen (4) im Bereich ihrer jeweiligen Kontaktkanten (15) einen dickeren Querschnitt haben.

4. Dichtung nach Anspruch 3, dadurch gekennzeichnet, daß das Ringstück (1) einstückig ausgebildet ist und daß die beiden Dichtlippen (4) untereinander durch eine sehr dünne Filmscharnierzone (17) verbunden sind, die eine kleine äußere Nut (27) begrenzt.

5. Dichtung nach Anspruch 2, dadurch gekennzeichnet, daß ihr Ringstück (1) einstückig ist und daß die beiden Dichtlippen (4) sich gemäß einer einzigen gemeinsamen Dichtkante (24) miteinander verbinden.

6. Dichtung nach einem der Ansprüche 2-5, dadurch gekennzeichnet, daß die Scharnierzonen (16, 17), die die Dichtlippen (4) mit den Hauptabschnitten (6) des Ringstückes (1) verbinden oder die sie untereinander verbinden, darauf ausgelegt sind, infolge der Deformation der Dichtlippen (4) Kräfte (23) auszuüben, die den Hysteresisverlust des den Druckring (3) bildenden Materiales kompensieren.

7. Dichtung nach einem der Ansprüche 2-6, dadurch gekennzeichnet, daß das Außenprofil (26) einer jeden Dichtlippe (4) konkav ist.

8. Dichtung nach einem der Ansprüche 2-7, dadurch gekennzeichnet, daß das Innenprofil (20) einer jeden Dichtlippe (4) entsprechend einem vorgegebenen Radius (24) nahe der Scharnierzone (27), die die beiden Lippen (4) untereinander verbindet, gekrümmt ist.

9. Dichtung nach einem der vorhergehenden Ansprüche, ausgenommen die Ansprüche 4 und 5, dadurch gekennzeichnet, daß das Ringstück in zwei Teile (1a, 1b), symmetrisch oder nicht, geteilt ist, von denen jeder Teil beinhaltet : einen Hauptkörper (6) mit Führungsfunktion, eine mit dem Hauptkörper (6) insbesondere durch eine Scharnierzone (16) verbundene Dichtlippe (4), die jedoch nicht mit der Dichtlippe (4) des anderen Teiles verbunden ist und, abgewandt zu der Dichtlippe (4), einen durch eine Abstreiflippe (11) verlängerten Steg (5).

10. Dichtung nach Anspruch 9, dadurch gekennzeichnet, daß der Druckring (3) in seiner Mitte einen äußeren ringförmigen Reinigungswulst (37) aufweist, der in den Zwischenraum (36) eingreift, der zwischen den beiden nicht miteinander verbundenen Dichtlippen (4) besteht.

**FIG.1**

0 070 947

## FIG. 2

## FIG. 3

## FIG.4

2

# FIG. 5

# FIG.6